Europäisches Patentamt

European Patent Office

Office européen des brevets

(19)

(11) Publication number: 0 172 670

A2

# (12) EUROPEAN PATENT APPLICATION

(21) Application number: 85305293.4

(22) Date of filing: 25.07.85

(51) Int. Cl.⁴: G07F 7/00

(30) Priority: 27.07.84 US 635258

(43) Date of publication of application:
26.02.86 Bulletin 86/09

(84) Designated Contracting States:
AT BE CH DE FR GB IT LI LU NL SE

(71) Applicant: Technion Research & Development Foundation
Senate House Technion City
Haifa 32000(IL)

(72) Inventor: Even, Shimon
13 Vitkin St.
34756 Haifa(IL)
Inventor: Goldreich, Oded
42 Pinkas St.
Tel Aviv(IL)
Inventor: Yacobi, Yacov
Moshav Atzmon
Doar-Na Galil Maaravi (20138)(IL)

(74) Representative: Billington, Lawrence Emlyn et al
HASELTINE LAKE & CO Hazlitt House 28 Southampton Buildings Chancery Lane
London WC2A 1AT(GB)

(54) An apparatus for effecting and recording monetary transactions.

(57) Apparatus for effecting and recording monetary transactions including apparatus for registering the present value of money therein, apparatus for selectably adjusting the registered value to indicate a payment and receipt transaction, and identity verification apparatus including asymmetric cryptographic apparatus coupled to the apparatus for adjusting for activation thereof. The apparatus as a whole is provided as an electronic wallet (10) comprising a display (12), a keyboard (14) and a connecting jack (16).

## AN APPARATUS FOR EFFECTING AND RECORDING MONETARY TRANSACTIONS

The present invention relates to an apparatus for effecting and recording monetary transactions.

Conventional wallets in which one carries cash money have long been known. One can open the wallet and extract an amount which does not exceed the present value therein, in order to make a payment, or one can receive payment from another party and deposit the received amount in the wallet, to increase the value therein accordingly.

Many methods exist for removing the inconvenience and risks of carrying cash in one's wallet. These include personal checks, traveler's checks, vouchers and credit cards, just to name a few. In addition, in order to eliminate the need for proximity during the transaction, methods have been developed for making payments from afar, such as using the mail system, telegraphing money orders and electronic fund transfer systems.

These systems suffer from a number of disadvantages. There is no easy way to verify that a payment received is not forged or that it is backed by proper credit (particularly in the case of checks and credit cards). Payments received cannot easily increase the current value or fund which is available for making payments. Electronic fund transfer systems are not suitable, in their present form, for use by an individual making an everyday payment.

There exist a number of so-called French Smart Cards distributed by a number of French companies which enable one to make payments but not to receive them. They are similar to ordinary automatic credit cards or banking cards, such as BANKOMAT in Europe, but the identification procedure seems to be more reliable since it may involve some cryptographic computations and not merely reading a magnetic tape. The details of their operation have not been published.

Davies' Signature Token described by D.W. Davies in "Use of the 'Signature Token' to Create a Negotiable Document", presented in Crypto 83, Santa Barbara, CA, U.S.A., August 1983 claims to enable the prevention of forgeries, but is unable to register the balance of the value available.

U.S. Patent 4,320,387 to Powell discloses apparatus for providing secured communication of information comprising individual units including display of information to be communicated, electronic circuit means providing automatic security of transmission between relatively remote units that are intended to be included in a specific transfer of information, electronic information storage means for recording of communicated information, and radiant energy signal transmitting devices for effecting coupling of any two selected apparatus units that are to participate in the information transfer. Time-base controlled signal encoding is utilized to effect generation of the communication to the two selected units and to provide security of transmission. This electronic circuitry includes a time-control base which is functional to change its control function in the same amount of time as that which would be required to complete one transaction in the recording phase of operation.

In operation, a coded signal corresponding to the information to be transferred is transmitted by one apparatus and received by the second. The receiving apparatus utilizes the same time-control base encoding to encode the data it expects to receive (i.e., as manually input by the owner). It then compares the received encoded data with the encoded expected data. If identical, the transaction proceeds. Since the encoder signal changes over time, certain fraudulent transactions are prevented since the received encoded data will not accord with the encoded expected data.

This apparatus suffers from a number of disadvantages. First, it is possible to bypass a portion of the identification system of each apparatus unit thereby lowering the security of the system. Second, and more importantly, knowledge of the time-control base function gained from any one apparatus unit permits one to engage in many fraudulent transactions, threatening the entire monetary system with collapse. Third, coded identification for all the other units are included in the memory of each unit, requiring a large memory capacity.

A preferred embodiment of the present invention may provide an electronic wallet which permits both payment and receipt of money, which includes an automatic identification system which prevents forgeries and which cannot be bypassed.

According to one aspect of the present invention there is provided an apparatus for effecting and recording monetary transactions comprising: means for registering the present value of money therein, means for selectably adjusting the registered value to selectably indicate payment and receipt, responsive to a manual control input; and identity verification means coupled to the means for adjusting for activation thereof.

According to a preferred embodiment of the invention, the means for selectably adjusting includes means for determining whether the transaction is permitted, and means for effecting transfer of value coupled to the means for registering present value.

Further according to a preferred embodiment, the means for identity verification includes cryptographic means which may include secret key encoder means arranged to encode data transmitted by the apparatus, and known key decoder means arranged to decode encoded data received by the apparatus.

Further in accordance with a preferred embodiment, the apparatus further includes cryptographic owner identification means.

Additionally in accordance with a preferred embodiment, the apparatus further comprises means for destroying the registered information which is activated by unauthorized physical entry.

There is further provided means for institutional validation of the apparatus.

According to another aspect of the present invention there is provided apparatus for effecting and recording monetary transactions including: means for registering the present monetary value of the apparatus; means operative in response to a first manual control input for identifying a permitted user; means operative in response to a second manual control input for registering the monetary value of a transaction; means for transmitting an encoded output signal corresponding to identification of the apparatus; means for receiving an encoded input signal corresponding to identification of an apparatus with which the transaction is to be effected; means for decoding and verifying the encoded received signal; means for transmitting an output signal corresponding to the monetary value of the transaction to the apparatus with which the transaction is to be effected; means for receiving an input signal corresponding to the monetary value of the transaction from the apparatus with which the transaction is to be effected; means for determining whether the transaction is permitted; means for transmitting an encoded output signal corresponding to the monetary value and direction of the transfer in the transaction to the apparatus with which the transaction is to be effected; means for receiving an encoded input signal corresponding to the monetary value and direction of the transfer in the transaction from the apparatus with which the transaction is to be effected; means for decoding and verifying the received signal; and means for adjusting the registered present value in accordance with the transfer effected by the transaction.

An apparatus of the present invention will be further understood and appreciated from the following detailed description taken in conjunction with the drawings in which:

Fig. 1 is an illustration of an electronic wallet constructed and operative in accordance with an embodiment of the present invention; and

Fig. 2 is a block diagram illustration of the electronic circuitry employed in the electronic wallet of Figure 1.

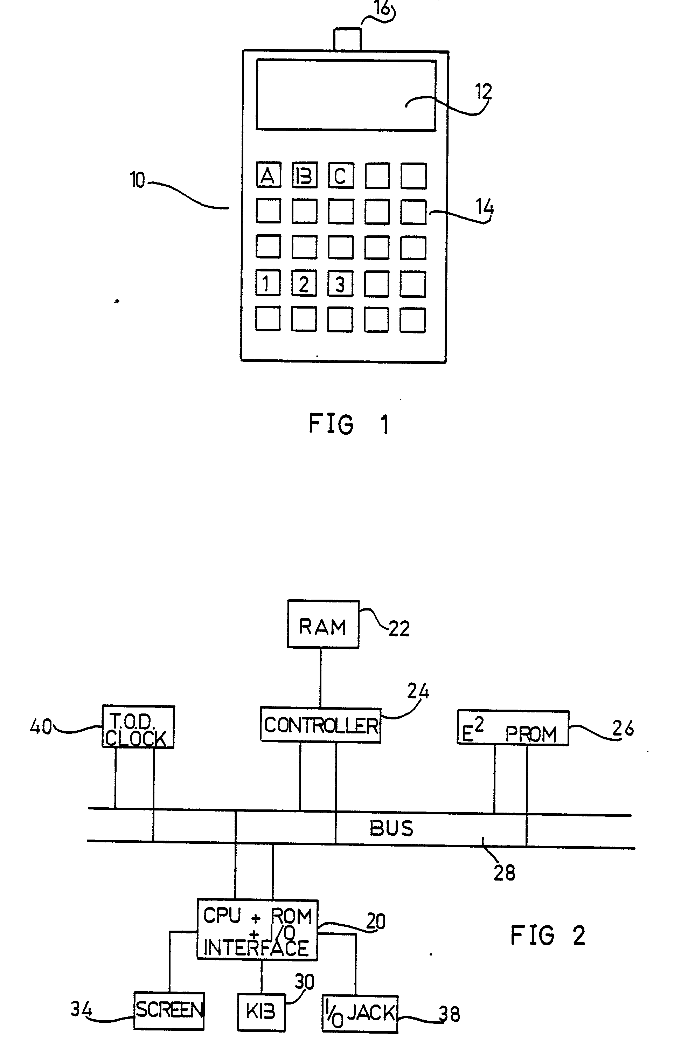

With reference to Fig. 1 there is shown an electronic wallet generally designated 10 constructed and operative in accordance with an embodiment of the present invention. The wallet may have the general appearance of a small pocket calculator, and comprises a display 12 of any conventional design, a keyboard 14 and a connecting jack or other coupling device 16.

Referring now to Fig. 2 there is shown in block diagram form the electronic circuitry employed in the electronic wallet of Figure 1. The circuitry includes a CPU 20 such as a microprocessor, including input/output interface and a ROM, for example model 8041A of Intel Corp., USA, a RAM 22, such as a 64K RAM, model number 2164 and associated controller 24, such as model 8203, both of Intel Corp., and an $E^2PROM$ 26, such as an $E^2PROM$, 2K x 8, model 2817 of Intel Corp., all coupled by bus 28. The wallet is powered as by batteries (not shown). RAM 22 serves to register the present value of the wallet along with the various transactions in which it has participated, as will be explained in detail hereinbelow. Microprocessor 20 is operative to adjust the present value registered in $E^2PROM$ 26 at any given time in accordance with a pre-programmed protocol.

A keyboard 30, which may comprise any conventional keyboard, preferably an alphanumerical keyboard, is coupled to microprocessor 20 for input of transaction data and personal identification codes. A display 34, which may comprise any conventional means for providing a visual display, is also coupled to microprocessor 20 for providing a visible output indication of the transaction data. There is also provided connecting means 38, such as a connecting jack or any other conventional means for coupling two electronic wallets for information transfer therebetween.

The electronic wallet also contains a real time clock 40, such as a Time of Day (T.O.D.) Clock, number WD2412, manufactured by Western Digital Corp., USA, which acts to record the time at which each transaction of the wallet occurs (30 bits are sufficient to represent time with resolution of seconds over a period of 30 years). The provision of a real time clock permits transactions between any wallets having compatible hardware and compatible transaction protocol while preventing such fraudulent transactions as improper repetition of a transfer.

In addition, the wallet preferably contains a list of cancelled wallets to prevent receipt of payments from wallets which have been found to be fraudulent or were reported stolen or lost. Such a list could be supplied to the wallet during validation. By issuing new series of identification numbers to the wallets periodically, this list can be kept short.

Preferably the wallet includes an audit trail, a list of all transactions of the wallet since the last validation, including all proofs of payments made to the wallet and receipts of all payments made by the wallet. The audit trail is retained in the RAM of the wallet until the next validation, at which time, the audit trail is transferred to the memory of the institution where validation occurs, and erased from the wallet. In addition to providing a record of transactions of the wallet, the audit trail also allows computation of the balance of a user who has lost his wallet, by tracing his credits and debits in the audit trails of the wallets with which the transactions occurred.

The wallet is also provided with user identification apparatus, which may comprise any conventional cryptographic system, to prevent unauthorized access to the wallet or tampering therewith. Thus, the owner of a wallet will have, for example, a password which is entered via the keyboard to the wallet to identify him at the start of a transaction.

The wallet also comprises, at any given time, an unforgeable "present value". For purposes of this application, unforgeable is defined as cryptographically signed in such a way as to force one to crack the cipher in order to forge a message. The value of the wallet is registered in the memory of the wallet and any increase or decrease due to receipt or payment of money is carried out and registered in accordance with a certain protocol, the new value being registered as the current present value. A conventional cryptosystem, such as the Data Encryption Standard, "DES Modes of Operation", FIPS PUB 81, Federal Information Processing Standards Publication, Dec. 2, 1980, may be utilized for encoding and decoding of information transferred from one wallet to the other.

In order to provide unforgeable present values and receipts, an asymmetric or public key encoding system is preferably employed for identity verification throughout the transaction. This means that a secret key, hard wired into the apparatus and known to no-one, is used to encode the data to be transferred to the other apparatus which is a party to the transaction. Similarly, data received from the other apparatus will be received encoded by the secret key of the other apparatus. A public key, or known decoder means, is provided to each apparatus to permit it to decode the data received by it before proceeding with the next step of the transaction. Thus, while any apparatus is capable of decoding the data received by it, only the legitimate wallet can encode data it transmits with its own secret key. This means that forgery is possible only by cracking the cipher using the public key.

A particularly suitable public key cryptosystem has been proposed by Rivest, Shamir and Adelman in "A Method for Obtaining Digital Signatures and Public Key Cryptosystems", Comm. ACM, Vol. 21, February 1978, pp. 120-126, to be utilized for internal encoding of data to be transferred between wallets. Alternatively, any other public-key signature cryptographic system will suffice, such as that described by Rabin, M.O. in "Digitalized Signatures and Public-Key Functions as Intractable as Factorization", MIT/LCS/TR-212, January 1979.

The various keys and passwords utilized by the owner for user identification, by the wallet for decoding and by the validating institution, will be found in the memory of the wallet. It will be appreciated that the preferred user identification and identity verification means are also suitable for identification from afar, such as through a telephone line or other means of communication.

It is a particular feature of the present embodiment that only the public keys of the banks or validating institutions and the public key of the owner signed by the bank need be retained in the memory of the wallet to permit transactions with all other wallets. Thus, a much smaller memory is required than in existing devices.

The particular advantage of using a public key cryptosystem is that, even if someone should manage to break the cipher in one wallet to forge transactions therein, he will be unable to subvert the entire banking system. Furthermore, if the wallet is forged, it will be detectable by means of the audit trails discussed above.

Preferably the wallet also includes means for destroying the information stored therein which is activated in the event that an attempt is made to penetrate the wallet physically or through some signals other than the legitimate signals used in the user identification means or in the protocols. For example, the wallet may be constructed in such a manner that opening it will short circuit the batteries, or destroy the microprocessor, or that x-rays or other attempts to read the encoded information will serve to destroy the coding. This serves to further prevent compromise of the whole monetary system by unauthorized entry into a wallet.

The wallet is validated through a renewal protocol with an authorized institution, such as a bank. The complementary device owned by the institution would read the audit trail of the wallet since its latest validation, erasing it from the wallet, insert the new value and supply additional information which may be useful. A flow chart of a suitable renewal protocol is given in the following chart.

RENEWAL PROTOCOL

```
Wallet                                        Authority

(Identification) ------------>

                              <---------------(Identification)

(Audit trail) --------------->

                              <-------------(signed    new    keys)

                              <--------(list  of  invalid  wallets)
```

where (DATA)----> indicates the transfer of data in the direction indicated by the arrow.

Transfers of money are effected by means of a transaction protocol. Operation of the wallet, in general terms, is as follows. For example, suppose i and j have agreed on a payment of v dollars by i to j. Each must first identify himself to his wallet by entering his password on the keyboard. Each enters the value v into his wallet and indicates whether it should be paid or received. Thus, a transaction may take place only if both parties agree to it.

The wallets are now coupled to one another via connecting means which may be a connecting jack or a telephone modem or any other means of coupling the wallets for transmitting and receiving of information from one another. The transfer of value from i's wallet to j's is carried out through a proper transaction protocol. It will be appreciated that such a transfer is only permitted if i's wallet has the necessary value, i.e., if the value of the paying wallet is greater than or equal to the sum to be paid. The result of the transaction is that the value in i's wallet has been reduced by v while the value in j's wallet has increased by v, the sum of the values of the wallets not being changed by the transaction.

An unforgeable receipt, or cryptographically signed proof of having paid the amount of the transaction, is provided to i's wallet in the form of data encoded by j's secret code, and registered therein. At the same time, an unforgeable proof of receipt of payment is registered in j's wallet in the form of data encoded by i's secret code. These proofs of payment and receipts are added to the wallet's audit trail.

A flow chart of an example of a suitable transaction protocol including a public key cryptosystem is as follows.

TRANSACTION PROTOCOL

```
     Wallet of i                            Wallet of j

-->(i Password; Pay vi)              -->(j Password;  Receive vj)

Is Vi < vi?

If yes, (EM)-------------->

If no, Dx(ei,i)------------>


                                     (ei,i):= Ex(Dx(ei,i))

                        <-----------(vj,  t,  Dx(ej,j)

Is vi = vj and is t reasonable?

If no,   (EM)-------------->

If yes,  (ej,j):= Ex(Dx(ej,j))

                        <-----------Dj (-vj,t,i)

Di (vi,t,j)---------------->

(v",t",i"):=Ej(Dj(vj,t,j))          (v',t',j'):=Ei(Di(vi,t,j))

If (v",t",i") = (vj,t,i),             If (v',t',j') = (vi,t,j),

      then Vi:= Vi - vi                   then Vj:= Vj + vj
```

where: $Vy$ = present value of wallet of y; $vy$ = value in transaction involving wallet y; $t$ = real time; (DATA)---> = transfer of data in the direction of the arrow; and (EM)---> = transmission of an Error Message, terminating the protocol.

Operation of the transaction protocol is as follows, with reference to the transaction protocol flow chart and with further reference to the transfer of the value v from i to j. Assuming a public-key cryptosystem is used, the public-key of user i is a pair of operators $(Ei, Di)$ each of which is operative to cancel the operation of the other, i.e., for every word W, $Ei(Di(W))$ = W. Operators $Ei$ and $Di$ serve to encode and decode data being transmitted to and from wallet i. In order to operate $Ei$, one must use the public-key $ei$, and in order to operate $Di$, one must use the secret-key $di$. The knowledge of $ei$ does not help to determine $di$. Even the owner of a wallet does not know the secret-key, $di$, stored therein.

The present contents of user j's wallet include $ex$ (the public key of the bank or other renewing institution) and $dj$ (j's secret key), as well as $Dx(ej,j)$ (j's public key certified by the bank and indicating that this is a valid wallet). $t$ represents real time as measured by the real time clock.

After i and j identify themselves to their wallets by inserting their respective passwords, and have inserted the value of the present transaction, the wallets are coupled to one another to establish communication, i.e, direct coupling or via a telephone. It will be appreciated that coupling of the wallets may alternatively be effected before user identification.

The value of the desired transaction $vi$ is compared with the current present value $Vi$ of i's wallet to determine whether the transaction is permitted. If $vi$ is greater than $Vi$, an error message is sent, thereby terminating the protocol.

If $vi$ is less than or equal to $Vi$, then i's public key certified by the bank, namely i's public key and identity $(ei,i)$ encoded by operation thereon of the bank's public key (operator $Dx$) is transmitted to j's wallet. In j's wallet, this data is decoded by the operation of the public key of the bank $(Ex)$.

Upon receipt of this data, the value j punched into his wallet as being the amount of the transaction $(vj)$, the real time $(t)$, and j's public key certified by the bank, namely j's public key and identity $(ej,j)$ encoded by operation thereon of the bank's secret key (operator $Dx$) are all transmitted to i's wallet. In i's wallet, j's public key is decoded by the operation of the public key of the bank $(Ex)$.

Wallet i now compares $vi$ and $vj$ to verify that the value of the transaction is equal. It also compares $t$ received from wallet j with the real time at which it transmitted its identifying transmission to be sure that no more than a predetermined limited amount of time has passed since initiation of the transaction. If either vi ≠ vj or there is a mismatch of real time t (e.g., ti≠tj + const), an error message is sent, terminating the protocol.

If vi = vj and t is reasonable, transfer of the value of the transaction is effected. J sends a receipt to i which includes the value paid by i (-vj), the real time, and the identity of i, all encoded by Dj (j's secret code known only to his wallet). Since Dj is secret even to j, this receipt is unforgeable unless the cipher is broken. Similarly, i sends a receipt to j which includes the value received by j (vi), the real time, and the identity of j, all encoded by Di (i's secret code known only to his wallet). Since Di is secret even to i, this receipt is unforgeable unless the cipher is broken. t prevents illegal duplication of the transaction.

In order to insure that the receipts correspond to the expected values and time of the transaction, each of wallets i and j decode the receipt using the public code of the other (Ei and Ej) and compare the decoded data with the expected values of v, t and i. If they are identical, the new present value of wallet i, Vi, which equals former Vi - vi, is registered in the memory of wallet i, and the new present value of wallet j, Vj, which equals former Vj + vj, is registered in the memory of wallet j. To avoid cutting communication before the last transmission, i.e., when only one receipt has been sent, secret exchange methods can be used, such as those set forth in Blum, M., "How to Exchange Secret Keys", Proceedings of the 15th Annual ACM Symposium on Theory of Computing, and Even, S. Goldreich, O. and Lempel, A. "A Randomized Protocol for Signing Contracts", Proceedings of Crypto 82, July 1983, between the last two communications.

It will be appreciated that, while each wallet preferably has its own self-contained power source, the value of the wallet is stored in a non-volatile memory, so that if the battery is inoperative, a transaction may not take place, but the owner of the wallet will not lose his money.

The wallets are protected against loss of money in case of loss of the wallet or misuse by someone other than the owner, since one must know the password in order to operate the wallet. They are protected against fraudulent transactions, as by eavesdropping on telephone lines and attempting to duplicate the transaction, by real time t, which must be reasonable in order for the apparatus to carry out the transaction. Similarly, they are protected against forging a transaction over the telephone lines since a signed or encoded receipt is required to conclude the transaction. And they are protected against the coupling of two legitimate wallets via improper hardware.

It will be appreciated by those skilled in the art that the invention is not limited to what has been shown and described hereinabove merely by way of example. Rather, the scope of the invention is limited solely by the claims which follow.

## Claims

1. Apparatus for effecting and recording monetary transactions comprising: means for registering the present value of money therein; means for selectably adjusting the registered value to selectably indicate payment and receipt, responsive to a manual control input; and identity verification means coupled to the means for adjusting for activation thereof.

2. Apparatus according to claim 1 and wherein said means for selectably adjusting comprises: means for determining whether the transaction is permitted; and means for effecting transfer of value coupled to the means for registering present value.

3. Apparatus according to claim 2 and wherein said means for effecting transfer comprises secret key encoder means arranged to encode data to be transmitted by the apparatus, and known key decoder means arranged to decode encoded data received by the apparatus.

4. Apparatus according to any preceding claim and further comprising cryptographic owner identification means.

5. Apparatus according to claim 2, or claim 3 or 4 when appended thereto and wherein said means for determining includes means for comparing the value of the transaction with the registered present value.

6. Apparatus according to claim 2, or claim 3, 4 or 5 when appended thereto, and whererin said means for determining includes means for determining whether the real time of the transaction falls within a predetermined range.

7. Apparatus according to any preceding claim and wherein said identity verification means comprises a public key cryptosystem.

8. Apparatus according to any preceding claim and further comprising means for destroying the registered information activated by physical tampering with the apparatus.

9. Apparatus according to any preceding claim and further comprising means for institutional validation of the apparatus.

10. Apparatus for effecting and recording monetary transactions comprising: means for registering the present monetary value of the apparatus; means operative in response to a first manual control input for identifying a permitted user; means operative in response to a second manual control input for registering the monetary value of a transaction; means for transmitting an encoded output signal corresponding to identification of the apparatus; means for receiving an encoded input signal corresponding to identification of an apparatus with which the transaction is to be effected; means for decoding and verifying the encoded received signal; means for transmitting an output signal corresponding to the monetary value of the transaction to the apparatus with which the transaction is to be effected; means for receiving an input signal corresponding to the monetary value of the transaction from the apparatus with which the transaction is to be effected; means for determining whether the transaction is permitted; means for transmitting an encoded output signal corresponding to the monetary value and direction of the transfer in the transaction to the apparatus with which the transaction is to be effected; means for receiving an encoded input signal corresponding to the monetary value and direction of the transfer in the transaction from the apparatus with which the transaction is to be effected; means for decoding and verifying the received signal; and means for adjusting the registered present value in accordance with the transfer effected by the transaction.

11. Apparatus according to claim 10 and wherein each of said means for transmitting comprises secret encoder means for encoding said output signals.

12. Apparatus according to claim 10 or 11 and wherein each of said means for receiving comprises known decoder means for decoding said input signals.

13. Apparatus according to claim 10, 11 or 12, and wherein said means for determining includes means for comparing the value of the transaction with the registered present value.

14. Apparatus according to claim 10, 11, 12 or 13, and wherein said means for determining includes a real time clock and means coupled to said real time clock and to said means for receiving for determining whether the real time of the transaction falls within a predetermined range.

15. Apparatus according to any one of claim 1 to 9, wherein said identity verification means includes cryptographic means.

16. Apparatus according to claim 15, wherein said cryptographic means is an asymmetric cryptographic means.

17. Apparatus according to any preceding claim, which has the general size, shape and portability of a pocket calcula-tor.

0 172 670

FIG 1

FIG 2

8